# EUROPÄISCHE PATENTSCHRIFT

(11) **EP 2 384 929 B1**
(45) Veröffentlichungstag und Bekanntmachung des Hinweises auf die Patenterteilung: **17.04.2019**
(21) Anmeldenummer: 11003555.7
(22) Anmeldetag: 02.05.2011
(51) Int. Cl.: B60P 1/44

(54) **Hubladebühne und Vorrichtung zur Befestigung einer Hubladebühne an einem Fahrzeug**
Tailgate lift and device for attaching a tailgate lift to a vehicle
Dispositif pour la fixation d'une hayon élévateur sur un véhicule

(30) Priorität: 04.05.2010 DE 102010019410
(43) Veröffentlichungstag der Anmeldung: 09.11.2011
(73) Patentinhaber: Palfinger Tail Lifts GmbH, 27777 Ganderkesee (DE)
(72) Erfinder: Zimmermann, Martin, 27711 Osterholz-Scharmbeck (DE)
(74) Vertreter: Möller, Friedrich

(56) Entgegenhaltungen:
- EP-A1- 1 659 024
- EP-A2- 1 318 046
- DE-A1- 4 004 036
- DE-A1- 4 114 705
- DE-A1- 19 521 441
- DE-U1- 29 605 136

## Beschreibung

Die Erfindung betrifft eine Vorrichtung zur Befestigung einer Hubladebühne an einem Fahrzeug gemäß dem Oberbegriff des Anspruchs 1. Des Weiteren betrifft die Erfindung eine Hubladebühne gemäß dem Oberbegriff des Anspruchs 10.

Hubladebühnen dienen zur Unterstützung des Be- und Entladevorgangs von Fahrzeugen, insbesondere Lastkraftwagen und Anhängern. Hierzu werden die Hubladebühnen im Heckbereich des Fahrzeugs am Chassis, und zwar vorzugsweise Längsträgern desselben, befestigt. Mit den Längsträgern sind üblicherweise zwei parallele, in Fahrzeuglängsrichtung orientierte Konsolen, die auch Konsolbleche genannt werden, verbunden. An den Konsolen wird ein quer zur Fahrzeuglängsrichtung orientiertes Tragrohr angehängt.

Die Verbindungen zwischen den Konsolen und dem Tragrohr müssen die unter allen Betriebsbedingungen der Hubladebühne auftretenden Kräfte und Momente aufnehmen. Weiterhin müssen die Verbindungen derart gestaltet sein, dass diese auf einfache Weise positionsgenau am Chassis des Fahrzeugs montiert werden können, und zwar insbesondere auch an unterschiedliche Abstände aufweisende Längsträger. Bekannte Hubladebühnen und Vorrichtungen zur Verbindung derselben mit dem Fahrzeug erfüllen diese Anforderungen nur unvollkommen.

Aus der gattungsgemäßen EP 1 659 024 A1 ist eine Hubladebühne bekannt, bei der die mit dem Fahrgestell des Fahrzeugs verbindbaren Konsolen mit Schraubkonsolen des Tragrohrs ausschließlich durch Schrauben verbunden sind.

Der Erfindung liegt die Aufgabe zugrunde, eine Hubladebühne und eine Vorrichtung zur Verbindung derselben mit dem Fahrzeug zu schaffen, die einfach montierbar ist, insbesondere eine einfache Montage an unterschiedliche Anbaumaße aufweisende Fahrzeuge zulässt.

Eine Vorrichtung zur Lösung der eingangs genannten Aufgabe weist die Merkmale des Anspruchs 1 auf. Demnach ist vorgesehen, dass jede Konsole nur an einer Stelle und/ oder nur an einer Seite mit jeweils einer Schraubkonsole verschraubt ist. Dadurch ist eine sehr einfache Montage und auch Demontage der Hubladebühne möglich. Die nur eine Schraubverbindung zwischen jeder Konsole am Fahrzeug und Schraubkonsole am Tragrohr lässt sich rasch herstellen. Es sind vor allem bei der erfindungsgemäßen Vorrichtung keine aufwendigen Ausricht- und Justierarbeiten mehr erforderlich.

Bevorzugt ist es vorgesehen, dass die Konsolen an ihren in Vorwärtsfahrtrichtung des Fahrzeugs gesehen hinteren Randbereichen mit den Schraubkonsolen verschraubt sind. Die einzige Verschraubung an der Hinterseite jeder Konsole nimmt die in allen Betriebszuständen der Hubladebühne auftretenden Lasten auf. Die vom Hubwerk in das Tragrohr und von diesem in die Konsolen eingeleiteten Kräfte und Momente werden so aufgefangen, ohne dass das Tragrohr von den Konsolen wegbewegt wird.

Eine vorteilhafte Weiterbildung der Vorrichtung sieht es vor, die Schraubkonsolen nur am Tragrohr zu befestigen, und zwar vorzugsweise an der (in Vorwärtsfahrtrichtung gesehen) Rückseite des Tragrohrs. Dadurch werden die Kräfte von der Konsole ausschließlich in das Tragrohr eingeleitet, und zwar insbesondere an die Hinterseite desselben. Hierdurch reicht es aus, jede Schraubkonsole mit der Konsole nur durch eine Schraubverbindung zu verschrauben. Diese einzige Schraubverbindung zwischen jeder Schraubkonsole und Konsole wird bevorzugt durch eine einzige Schraube gebildet. Sie kann aber auch durch mehrere benachbarte Schrauben gebildet sein, die konstruktiv und mechanisch gesehen eine gemeinsame zusammenhängende Schraubverbindung bilden.

Die Erfindung sieht es bevorzugt vor, jede Schraubkonsole von oben gesehen U-förmig auszubilden. Eine solche U-förmige Schraubkonsole weist zwei parallele senkrechte Schenkel auf, die in Fahrtrichtung verlaufen. Die Schenkel einer solchen U-förmigen Schraubkonsole sind durch einen Steg verbunden, der senkrecht verläuft und sich quer zur Fahrtrichtung erstreckt. Der Steg liegt mit parallelem Abstand hinter dem Tragrohr. Außerdem ist es bevorzugt vorgesehen, den Schenkel mit mindestens einem horizontalen Langloch zu versehen. Das horizontale Langloch des jeweiligen Schenkels ermöglicht eine Anpassung an unterschiedliche Abstände der Längsträger des Fahrzeugrahmens, woran die an den Schraubkonsolen zu befestigenden Konsolen angeschraubt sind. Durch den parallelen Abstand des jeweiligen Schenkels der U-förmigen Schraubkonsole zur Hinterseite des Tragrohrs wird Platz zum Einführen einer Schraube der Schraubverbindung in das jeweilige Langloch geschaffen. Die Befestigung des Stegs der Schraubkonsole mittels der Schenkel hinter dem Tragrohr führt dazu, dass die Kräfte ausschließlich in das Tragrohr eingeleitet werden. Außerdem können die U-förmigen Schraubkonsolen vor der Montage des Tragrohrs mit demselben verbunden werden, und zwar bevorzugt durch Schweißen. Dadurch bilden die U-förmigen Schraubkonsolen mit dem Tragrohr eine zusammen handhabbare mechanische Einheit.

Gemäß einer anderen vorteilhaften Weiterbildung der Vorrichtung ist jede Konsole als ein Konsolblech ausgebildet, dessen ebener Hauptschenkel schneidet eine Längsachse des Tragrohrs senkrecht. Die vorzugsweise zwei Konsolbleche zur Bildung der Vorrichtung liegen dadurch parallel zueinander in Hauptlastrichtung.

Vorzugsweise ist das jeweilige Konsolblech am hinteren senkrechten Rand zweifach rechtwinklig abgeknickt zur Bildung eines (von oben gesehen) U-förmigen Randes. Der rechtwinklig zum einen Hauptteil des Konsolblechs bildenden Hauptschenkel abgewinkelte Steg des jeweiligen Konsolblechs verläuft dann parallel zum Steg der dazugehörenden Schraubkonsole am Tragrohr. Diesem Steg jedes Konsolblechs ist die einzige Schraubverbindung zum Verschrauben des betreffenden Konsolblechs mit der dazugehörenden Schraubkonsole des Tragrohrs zugeordnet. Diese besondere Ausbildung des jeweiligen Konsolblechs führt zur Versteifung des hinteren Randes des Konsolblechs. Dadurch kann mit der einen Schraubverbindung eine stabile Befestigung des Tragrohrs am jeweiligen Konsolblech erfolgen. Dabei reicht es aus, wenn nur eine Schraubverbindung an der Rückseite des Tragrohrs, insbesondere hinter dem Tragrohr, vorgesehen ist, um dieses mit dem jeweiligen Konsolblech zu verbinden. Eine einzige Schraubverbindung im Sinne der Erfindung ist auch dann vorhanden, wenn mehrere benachbarte Schrauben quasi an einer Stelle vorgesehen sind, um den U-förmig gewinkelten hinteren Rand des jeweiligen Konsolblechs mit der Hinterseite des Tragrohrs zu verbinden.

Erfindungsgemäß sieht es vor, dass jede Konsole an einer anderen Stelle, die der Stelle oder Seite, an der die Konsole mit der Schraubkonsole verschraubt ist gegenüberliegt, zusätzlich durch eine Steck- bzw. Hakenverbindung mit dem Tragrohr verbunden ist. Diese zusätzliche Steck- oder Hakenverbindung erleichtert die Montage des Tragrohrs, vorzugsweise mit dem daran schon montierten Hubwerk der Hubladebühne, an den Konsolen. Die Steck- bzw. Hakenverbindungen fixieren schon vor dem Herstellen der Verschraubung das Tragrohr unter den Konsolen. Die Schrauverbindung kann dadurch einfacher hergestellt werden. Beim Betrieb der Hubladebühne sind die Steck- bzw. Hakenverbindungen kaum belastet, so dass diese nicht so dimensioniert sein müssen, dass sie die gleiche Festigkeit wie die Schraubverbindungen aufweisen.

Bevorzugt verfügt jedes Konsolblech an der (in Vorwärtsfahrtrichtung des Fahrzeugs gesehen). Vorderseite, und zwar bevorzugt am unteren Eckbereich, einen hakenartigen Vorsprung für eine Hakenverbindung des jeweiligen Konsolblechs mit dem Tragrohr auf. Diese Hakenverbindung liegt somit wie die Schraubverbindung am unteren Ende des jeweiligen Konsolblechs, an dem das Tragrohr befestigt wird. Dadurch, dass die Schraubverbindung und die Hakenverbindung gegenüberliegenden Seiten des Konsolblechs (vorn und hinten) zugeordnet sind, hält die Hakenverbindung das Tragrohr unter dem jeweiligen Konsolblech, um so das Herstellen der jeweiligen Schraubverbindung zu erleichtern.

Es ist weiterhin vorgesehen, dass das Tragrohr mindestens einen Vorsprung aufweist, der mit den hakenartigen Vorsprüngen der Konsolbleche korrespondiert. Ist nur ein Vorsprung vorgesehen, erstreckt sich dieser über die Vorsprünge beider Konsolbleche. Bevorzugt weist das Tragrohr zwei getrennte Vorsprünge auf, wobei jeder Vorsprung am Tragrohr dem Vorsprung am jeweiligen Konsolblech zugeordnet ist und hiermit so korrespondiert, dass sie zusammen die Steck- bzw. Hakenverbindung bilden.

Die Hakenverbindungen an den beiden Konsolblechen sind bevorzugt so ausgebildet, dass sie durch ein Verlagern des Tragrohrs in Vorwärtsfahrtrichtung des Fahrzeugs schließbar sind. Vorzugsweise ist bei dieser Vorwärtsbewegung auch eine dem jeweiligen Konsolblech zugeordnete Schraube die die dazugehörige Bohrung, insbesondere das Langloch in der jeweiligen Schraubkonsole, hindurchschiebbar. Dazu werden vorzugsweise Schrauben verwendet, die klemmend oder rastend am Schraubenkopf mit dem Konsolblech fixierbar sind, so dass die Schrauben mit dem Konsolblech durch die Bohrungen bzw. Langlöcher in den Schraubkonsolen am Tragrohr hindurchsteckbar sind. Dadurch, dass durch eine Horizontalverschiebung des Tragrohrs in Vorwärtsfahrtrichtung sämtliche Verbindungen zu beiden Konsolblechen, und zwar die Hakenverbindungen und die Schraubverbindungen, so weit hergestellt werden, dass sie das Tragrohr, und zwar gegebenenfalls mit dem daran schon verbauten Hubwerk der Hubladebühne, sicher unter den Konsolblechen halten, wird die Montage stark vereinfacht. Insbesondere können nach dem Unterhaken des Tragrohrs unter die Konsolbleche die Muttern der Schraubverbindungen einfach auf die Schrauben aufgedreht und festgezogen werden.

Eine Besonderheit einer bevorzugt weitergebildeten Vorrichtung besteht darin, dass die Schraubverbindung jeder Konsole bzw. jedes Konsolblechs auf den in Vorwärtsfahrrichtung des Fahrzeugs gesehenen Rückseite des Tragrohrs sich befindet, während die dazugehörende Steck- bzw. Hakenverbindung auf der Vorderseite des Tragrohrs vorgesehen ist. Dadurch werden unter allen Betriebsbedingungen der Hubladebühne auftretenden Kräfte und Momente über die Schraubverbindungen vom Tragrohr in die Konsolen, insbesondere Konsolbleche, eingeleitet. Die Haken- bzw. Steckverbindungen werden dadurch beim Betrieb der Hubladebühne kaum belastet, so dass sie nicht so dimensioniert sein müssen wie die Schraubverbindungen.

Eine Hubladebühne zur Lösung der eingangs genannten Aufgabe weist die Merkmale des Anspruchs 10 auf. Bei dieser Hubladebühne ist vorgesehen, dass jede der vorzugsweise zwei Konsolen zur Befestigung des Tragrohrs unter dem Chassis des Fahrzeugs nur an einer Stelle und/oder nur an einer Seite mit der jeder Konsole zugeordneten Schraubkonsole am Fahrzeug verschraubt ist. Dieses führt zu einer einfachen und rasch montierbaren Verbindung der Hubladebühne mit dem Chassis des Fahrzeugs. Diese Art der Verbindung lässt sich auch problemlos an unterschiedlich bemessene Chassis anpassen.

Eine bevorzugte Hubladebühne zur Lösung der eingangs genannten Aufgabe weist eine Vorrichtung mit mindestens einigen Merkmalen der Ansprüche 1 bis 10 auf. Zur Vermeidung von Wiederholungen wird insoweit auf die zuvor beschriebenen Merkmale und Vorteile der Vorrichtung Bezug genommen.

Ein bevorzugtes Ausführungsbeispiel der Erfindung wird nachfolgend anhand der Zeichnung näher erläutert. In dieser zeigen:

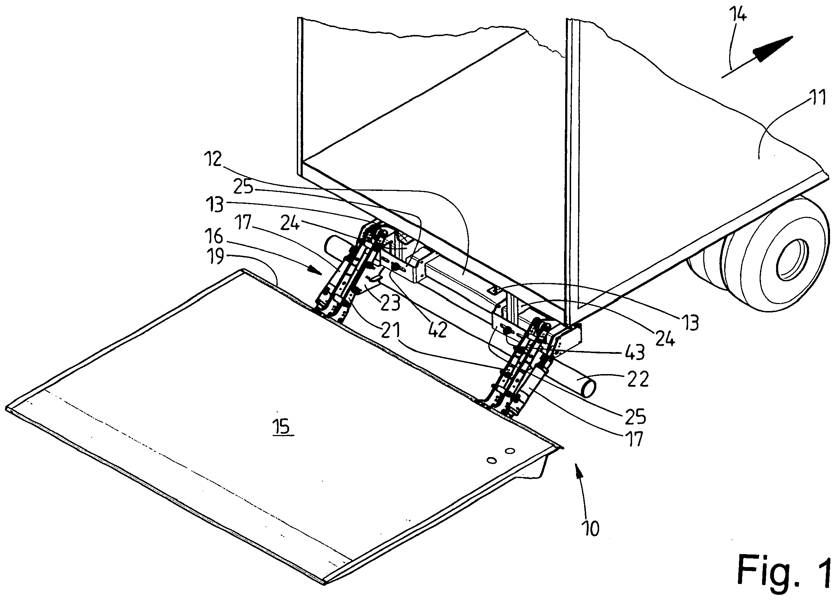

- Fig. 1: eine perspektivische Ansicht einer am Heck eines teilweise dargestellten Fahrzeugs angebauten Hubladebühne,

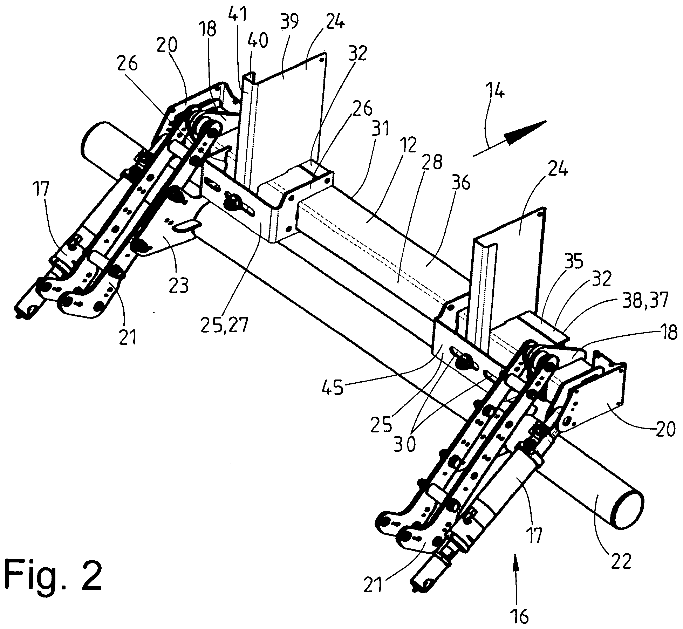

- Fig. 2: eine perspektivische Ansicht eines Teils der Hubladebühne der Fig. 1,

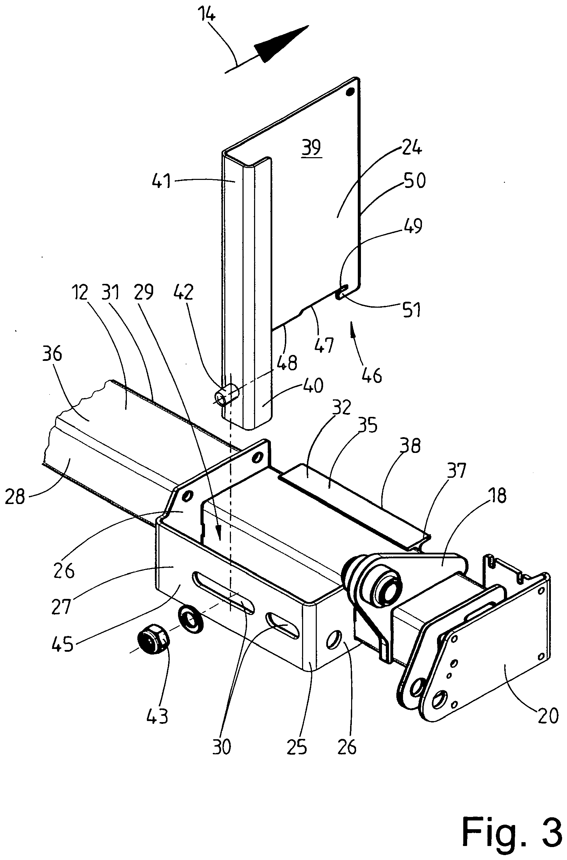

- Fig. 3: eine perspektivische Ansicht eines rechten Teils der ummontierten Hubladebühne,
- Fig. 4: die ummontierte Hubladebühne der Fig. 3 bei einem Querschnitt durch ein Tragrohr,

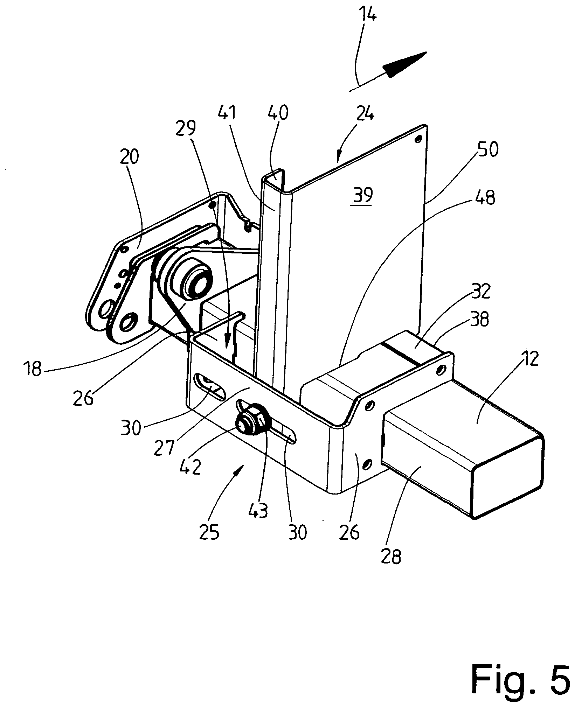

- Fig. 5: eine perspektivische Ansicht eines linken Teils der montierten Hubladebühne, und
- Fig. 6: die montierte Hubladebühne der Fig. 5 in einem Querschnitt durch das Tragrohr analog zur Darstellung der Fig. 4.

Die Figuren zeigen eine Hubladebühne 10, die eine Vorrichtung aufweist, womit die Hubladebühne 10 am Heck eines teilweise dargestellten Fahrzeugs 11 befestigbar ist. Die Hubladebühne 10 ist lösbar mit einem Tragrohr 12 am Fahrgestellrahmen, und zwar vorzugsweise zwei parallelen Längsträgern 13 des Fahrzeugs 11, befestigt. Das Tragrohr 12, das im gezeigten Ausführungsbeispiel über ein Vierkantprofil verfügt, erstreckt sich quer zur Längsachse bzw. Vorwärtsfahrtrichtung 14 des Fahrzeugs 11. Die Länge des Tragrohrs 12 ist so bemessen, dass sich dieses nahezu über die gesamte Breite des Fahrzeugs 12 erstreckt.

Die Hubladebühne 10 verfügt im Wesentlichen über eine Ladeplattform 15 und ein Hubwerk 16 zum Auf- und Abbewegen und Verschwenken der Ladeplattform 15. Das Hubwerk 16 ist mit mindestens einem Hydraulikzylinder zum Verschwenken der Ladeplattform 15 sowie mindestens einem Hydraulikzylinder zum Heben und Senken der Ladeplattform 15 versehen. Die gezeigte Hubladebühne 10 weist zwei Schwenkzylinder 17 und zwei nicht gezeigte Hubzylinder auf. Das Hubwerk 16 verfügt außerdem über zwei parallele Lenkerarme 21. Die Lekerarme 21 sind einerseits mit Lagerböcken 17 schwenkbar am Tragrohr 12 gelagert und andererseits schwenkbar am zur Rückseite des Fahrzeugs 11 weisenden Querrand 19 der Ladeplattform 15 angelenkt. Auch die Schwenkzylinder 17 sind zum einen mit Lagerböcken 20 schwenkbar am Tragrohr 12 und zum anderen gelenkig am Querrand 19 der Ladeplattform 15 befestigt. Dadurch bilden jeweils ein Lenkerarm 21 und der diesem zugeordnete Schwenkzylinder 17 ein Parallelogramm. Die Lagerböcke 18 und 20 sind fest mit dem Tragrohr 12 verbunden, indem an gegenüberliegenden Endbereichen des Tragrohrs 12 jeweils ein Lagerbock 18 für einen Lenkerarm 21 und ein Lagerbock 20 für einen Schwenkzylinder 17 vorgesehen ist.

Die hier gezeigte Hubladebühne 10 ist mit einem Unterfahrschutz versehen. Dieser verfügt über ein quer zur Vorwärtsfahrtrichtung 14, also parallel zum Tragrohr 12, sich erstreckendes Unterfahrschutzrohr 22, das über Befestigungslaschen 23 mit Innenseiten der beiden gleichen Lenkerarmen 21 verbunden ist, und zwar im gezeigten Ausführungsbeispiel lösbar durch Schrauben. Dadurch ist das Unterfahrschutzrohr 22 zusammen mit den Lenkerarmen 21 verschwenkbar zur Bildung eines sogenannten mitfahrenden Unterfahrschutzes.

Die Hubladebühne 11 ist mit dem Tragrohr 12 an den beiden Längsträgern 13 des Fahrgestells des Fahrzeugs 11 lösbar befestigt durch zwei im gezeigten Ausführungsbeispiel als Konsolbleche 24 ausgebildete Konsolen und zwei Schraubkonsolen 25. Jeweils ein Konsolblech 24 und eine Schraubkonsole 25 korrespondieren miteinander zur Verbindung des Tragrohrs 12 mit jeweils einem Längsträger 13 des Fahrgestells des Fahrzeugs 11. Beide Konsolbleche 24 und beide Schraubkonsolen 25 sind gleich ausgebildet, jedoch spiegelbildlich bezogen auf die Längsmittelachse des Fahrzeugs 11 angeordnet.

Die beiden Schraubkonsolen 25 sind in Vorwärtsfahrtrichtung 14 gesehen hinter dem Tragrohr 12 angeordnet. Jede Schraubkonsole 25 ist von oben gesehen U-förmig ausgebildet. Dazu besteht jede Schraubkonsole 25 aus zwei parallelen Schenkeln 26, die durch einen längeren Steg 27 einstückig verbunden sind. Die parallelen Schenkel 26 jeder Schraubkonsole 25 schneiden rechtwinklig die horizontale Längsmittelachse des Tragrohrs 12. Demgegenüber liegt der Steg 27 jeder Schraubkonsole 25 in einer aufrechten Ebene, die parallel zur Längsmittelachse des Tragrohrs 12 verläuft. Die Schraubkonsolen 25 sind mit ihren Schenkeln 26 mit dem Tragrohr 12 vorzugsweise durch Schweißen verbunden. Der Steg 27 jeder Schraubkonsole 25 erstreckt sich mit parallelem Abstand hinter der aufrechten Rückwandung 28 des einen rechteckigen Querschnitt aufweisenden Tragrohrs 12. Dadurch entsteht hinter dem Tragrohr 12 ein Zwischenraum 29 zwischen dem Steg 27 jeder Schraubkonsole 25 und der Rückwandung 28 des Tragrohrs 12.

Im Steg 27 jeder Schraubkonsole 25 befindet sich mindestens ein horizontales Langloch 30. Im gezeigten Ausführungsbeispiel verfügt jeder Steg 27 über zwei nebeneinanderliegende Langlöcher 30, wobei das zweite Langloch 30 in jedem Steg 27 kürzer ist als das erste Langloch 30. Es ist auch denkbar, dass in jedem Steg 27 an der Stelle der Langlöcher 30 eine Reihe mehrerer auf einer horizontalen Linie nebeneinanderliegender Durchgangsbohrungen vorzusehen.

Einer oberen, vorderen Kante 31 des Tragrohrs 12 sind zwei T-Profile 32 zugeordnet. Die T-Profile 32 befinden sich im Bereich jeder Schraubkonsole 25, und zwar zwischen den parallelen Schenkeln 26 jeder Schraubkonsole 25. Die T-Profile 32 sind bevorzugt mit dem Tragrohr 12 verschweißt. Dabei liegt ein senkrechter Schenkel 33 jedes T-Profils 32 vor der senkrechten Vorderwandung 34 des Tragrohrs 12 an. Ein horizontaler Schenkel 35 liegt mit einer hinteren Hälfte auf einer horizontalen Oberseite des Tragrohrs 12 an. Demgegenüber steht die vordere Hälfte des horizontalen Schenkels 35 jedes T-Profils 32 gegenüber der vorderseitigen oberen Kante 31 des Tragrohrs 12 horizontalgerichtet vor zur Bildung eines nasenartigen Vorsprungs 37 am Tragrohr 12. Jeweils ein Vorsprung 37 ragt zwischen den Schenkeln 26 der Schraubkonsole 25 in Vorwärtsfahrtrichtung 14 des Fahrzeugs 11 vor, und zwar horizontalgerichtet. Das freie Ende jedes Vorsprungs 37 bildet eine gegenüber dem Tragrohr 12 vorstehende Hakenkante 38, die mit parallelem Abstand in Richtung zur Vorderseite des Fahrzeugs 11 zur oberen vorderen Kante 31 des Tragrohrs 12 verläuft.

Jedes der beiden gleich ausgebildeten Konsolbleche 24 verfügt über ein plattenartiges Hauptteil 39, das am hinteren aufrechten Rand zweimal um 90° abgewinkelt ist. Das plattenförmige Hauptteil 39 ist senkrecht gerichtet, und zwar so, dass die Ebene des Hauptteils 39 die Längsachse des Tragrohrs 12 rechtwinklig schneidet. Die doppelte Abwinklung der senkrechten Hinterkante des Hauptteils 39 führt dazu, dass das Konsolblech 34 von oben gesehen eine U-förmige Gestalt aufweist, wobei die parallelen Schenkel ungleich lang sind. Ein längerer Schenkel des Konsolblechs 24 wird vom Hauptteil 39 gebildet, während ein parallel dazu verlaufender kürzerer Schenkel 40 durch die zweite Umbiegung des hinteren Randes des Konsolblechs 24 zustande kommt. Verbunden sind der Schenkel 40 und das Hauptteil 39 durch einen senkrechten Steg 41. Der Steg 41 verläuft parallel zum Tragrohr 12 und auch parallel zum Steg 27 der Schraubkonsole 25. Jede Schraubkonsole 25 ist mit dem ihr zugeordneten Konsolblech 24 an den Stegen 27 und 41 verschraubt. Diese Verschraubung jedes Konsolblechs 24 mit der Schraubkonsole 25 geschieht nur an einer einzigen Stelle an der Rückseite des Tragrohrs 24 bzw. hinter demselben. Die Verschraubung erfolgt außerdem an der Rückseite des jeweiligen Konsolblechs 24.

Die nur an einer Stelle erfolgende rückseitige Verschraubung jedes Konsolblechs 24 mit der Schraubkonsole 25 hinter den Tragrohren 12 erfolgt durch eine Schraubverbindung aus einer Schraube 42 und einer Mutter 43. Weil im gezeigten Ausführungsbeispiel die Hubladebühne 10 mit zwei Konsolblechen 24 und Schraubkonsolen 25 am Fahrzeug befestigt ist, sind zur Montage der Hubladebühne 10 am Fahrzeug 11 insgesamt zwei Schraubverbindungen herzustellen, und zwar jeweils eine pro Schraubkonsole 25 und Konsolblech 24. Die Schraube 42 jeder Schraubverbindung ist durch eine Durchgangsbohrung im unteren Endbereich des Stegs 41 des Konsolblechs 24 hindurchgeführt, und zwar so, dass ein Schraubenkopf 44 der Schraube 42 an der zum Tragrohr 12 weisenden Innenseite des Stegs 41 des Konsolblechs 24 anliegt, während der Gewindeschaft der Schraube 42 gegenüber der am Steg 27 der Schraubkonsole 25 anliegenden Außenseite des Stegs 41 vorsteht. Dabei verläuft die Längsmittelachse der Schraube 42 horizontalgerichtet parallel zur Längsrichtung des Fahrzeugs 11, also quer zum Tragrohr 12. Der Gewindeschaft der Schraube 42 ragt bei montierter Hubladebühne 10 durch eines der Langlöcher 30 im Steg 27 der Schraubkonsole 25 hindurch, so dass das freie Ende der Schraube 42 zur Rückseite des Fahrzeugs 11 weist. Auf dieses freie Ende der Schraube 42 ist nach der Montage der Hubladebühne 10 die Mutter 43 von der Rückseite des Fahrzeugs 11 her aufgeschraubt, so dass sich die Mutter 43 gegebenenfalls mit einer Unterlegscheibe an einer Außenseite des Stegs 27 der jeweiligen Schraubkonsole 25 abstützt. Die festgezogene Schraubverbindung ist durch eine übliche Schraubensicherung gesichert, beispielsweise durch Verwendung einer selbstsichernden Mutter 43.

Bei den Konsolblechen 24 des gezeigten Ausführungsbeispiels ist noch eine zusätzliche formschlüssige Verbindung mit dem Tragrohr 12 vorgesehen. Diese Verbindung zwischen jedem Konsolblech 24 und der ihr zugeordneten Schraubkonsole 25 befindet sich auf der den Schraubverbindungen gegenüberliegenden Vorderseite des Tragrohrs 12. Zur Bildung dieser formschlüssigen Verbindung weist jedes Konsolblech 24 am unteren, vorderen Eckbereich einen Haken 46 auf. Dieser Haken 46 kommt zustande durch eine Ausnehmung 47 in einer Unterkante 48 des Hauptteils 39 des Konsolblechs 24. Die Ausnehmung 47 erstreckt sich nur über einen vorderen Teil der Unterkante 48. Die Ausnehmung 27 endet mit etwas Abstand vor der unteren vorderen Ecke des Konsolblechs 24. Diese Ecke des Konsolblechs 24 liegt bei montierter Hubladebühne 10 in Vorwärtsfahrtrichtung 14 gesehen vor der Vorderwandung 34 des Tragrohrs 12. Im in Vorwärtsfahrtrichtung 14 gesehen vorderen Ende der Ausnehmung 47 ist ein von der Unterkante 48 des Hauptteils 39 beabstandeter Schlitz 49 vorgesehen. Dadurch, dass dieser Schlitz 49 von der Unterkante 48 beabstandet ist und sich ausgehend vom vorderen Ende der Ausnehmung 47 bis zum halben Ende des Abstands der Ausnehmung zu einer vertikalen Vorderkante 50 des Konsolblechs 24 erstreckt, entsteht unter dem Schlitz 49 ein gegen die Vorwärtsfahrtrichtung 14 nach hinten gerichteter Vorsprung 51. Dieser Vorsprung 51 in Verbindung mit dem darüberliegenden Schlitz 49 führt zur Ausbildung des Hakens 46 im Endbereich der Unterkante 48 des Hauptteils 39 des Konsolblechs 24.

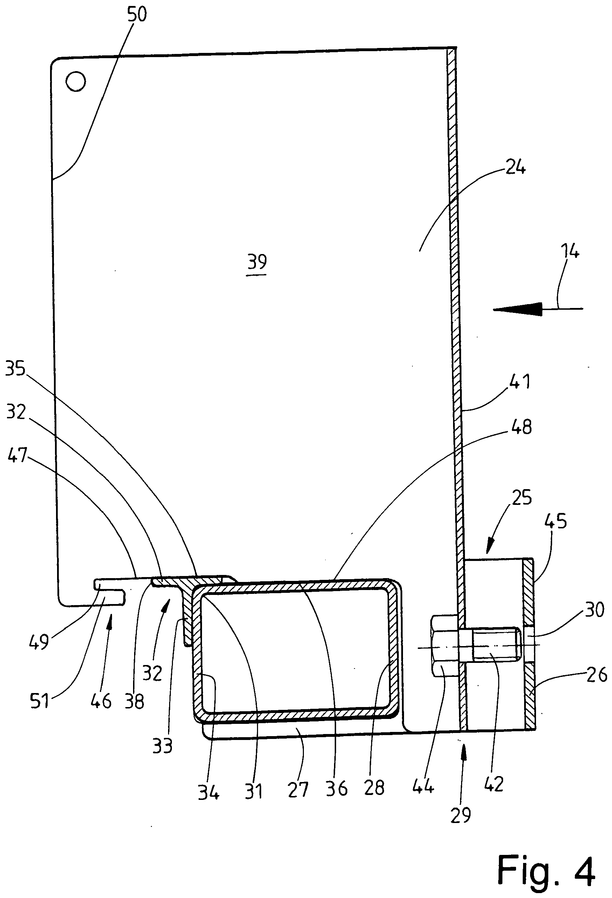

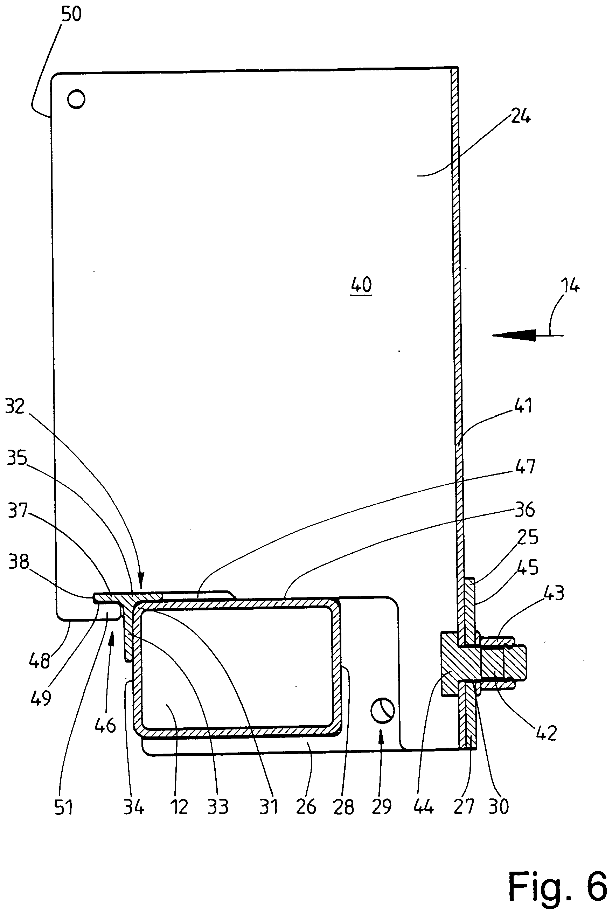

Die Fig. 4 und 6 lassen besonders deutlich das Verbinden der Schraubkonsolen 25 am Tragrohr 12 mit den Konsolblechen 24 unter den Längsträgern 13 des Fahrgestells des Fahrzeugs 11 erkennen. Diese Figuren verdeutlichen auch die Ausbildung jedes Vorsprungs 37 der am Tragrohr 12 befestigten T-Profile 32 und den Schlitz 49 in jedem Konsolblech 24. Diese korrespondieren derart miteinander, dass der Vorsprung 37 des jeweiligen T-Profils 32 bei Verschiebung des Tragrohrs 12 in Vorwärtsfahrtrichtung 14 in Eingriff mit dem dazu korrespondierenden Schlitz 49 im jeweiligen Konsolblech 24 gelangt.

Der Schlitz 49 ist mit einem solchen Abstand von der Vorderkante 50 im jeweiligen Konsolblech 24 angeordnet, dass das Tragrohr 12 von unten gegen die Konsolbleche 24 bewegt werden kann, wobei die Vorsprünge 37 der T-Profile 32 am Tragrohr 12 in die Ausnehmungen 47 zur Bildung der Haken 46 gelangen können und dabei gleichzeitig die im Steg 41 jedes Konsolblechs 24 fixierte Schraube 42 im Zwischenraum 29 zwischen der Rückwandung 28 des Tragrohrs 12 und dem Steg 27 der Schraubkonsole 25 hindurchbewegbar ist (Fig. 4). Durch das Ansetzen des Tragrohrs 12 unter die Konsolbleche 24 gelangen die Vorsprünge 37 der T-Profile 32 am Tragrohr 12 vor den Schlitz 49 im jeweiligen Konsolblech 24. Gleichzeitig gelangt die am Steg 27 des jeweiligen Konsolblechs 24 fixierte Schraube 42 vor das Langloch 30 in der jeweiligen Schraubkonsole 25. Durch eine anschließende Horizontalbewegung des Tragrohrs 12 in Vorwärtsfahrtrichtung 14 gelangt der jedem Konsolblech 24 zugeordnete Vorsprung 37 des T-Profils 32 am Tragrohr 12 in den Schlitz 49 des betreffenden Konsolblechs 24. Bei dieser Bewegung wird gleichzeitig der gegenüber dem Steg 41 des jeweiligen Konsolblechs 24 gegen die Vorwärtsfahrtrichtung 14 nach hinten vorstehende Gewindeschaft der Schraube 42 durch das betreffende Langloch 30 im Steg 27 der Schraubkonsole 25 am Tragrohr 12 geschoben (Fig. 6). Danach ist das Tragrohr 12 unter den Konsolblechen 24 formschlüssig fixiert. Bei dem vorstehend beschriebenen Montagevorgang kann am Tragrohr 12 schon die ganze Hubladebühne 10 oder mindestens das Hubwerk 16 derselben einschließlich des Unterfahrschutzrohrs 22 montiert sein. Es ist aber auch denkbar, diese Montage erst vorzunehmen, nachdem das Tragrohr 12 unter den Konsolblechen 24 fixiert und gesichert ist.

Das Sichern des Tragrohrs 12 unter den Konsolblechen 24 erfolgt durch Aufbringen der Mutter 43 auf die Schraube 42 im Steg 41 jedes Konsolblechs 24. Die Mutter 43 wird in an sich üblicher Weise gegen unbeabsichtigtes Lösen gesichert. Beispielsweise kann es sich um eine selbstsichernde Mutter 43 handeln. Nach dem Anziehen der Mutter 43 liegt der Steg 41 des jeweiligen Konsolblechs 24 am Steg 27 der Schraubkonsole 25 an, wobei durch die einzige Schraubverbindung an der Rückseite jedes Konsolblechs 24 die Stege 27 und 41 zusammengepresst werden.

In umgekehrter Reihenfolge lässt sich das Tragrohr 12 mit oder ohne die Hubladebühne 10 von den Konsolblechen 24 des Fahrzeugs 11 wieder lösen.

Beim hier dargestellten Ausführungsbeispiel ist das Tragrohr 12 mit zwei Konsolblechen 24 am Fahrzeug 11 befestigt, wobei jedes Konsolblech 24 am oberen Endbereich mit einem der beiden parallelen Längsträgern 13 des Fahrzeugs 11 verbunden ist. Jedem der beiden Konsolbleche 24 ist eine eigene Schraubkonsole 25 zugeordnet. Jedes Konsolblech 24 ist mit der dazugehörenden Schraubkonsole 25 mit einer einzigen Schraubverbindung, insbesondere Schraube 42 und Mutter 43, an der Rückseite des Tragrohrs 12 miteinander verschraubt sind. Es sind also zwei Schraubverbindungen vorhanden, und zwar eine pro Konsolblech 24 und Schraubkonsole 25. Im gezeigten Ausführungsbeispiel ist jedes Konsolblech 24 mit einem Haken 46 noch an der Vorderseite des Tragrohrs 12 mit demselben verbunden. Diese Verbindung dient im Wesentlichen nur zur einfacheren Montage des Tragrohrs 12 unter den Konsolblechen 24, damit das Tragrohr 12 bis zum endgültigen Herstellen, nämlich Anziehen, der Schraubverbindung sicher und positionsgenau unter den Konsolblechen 24 gehalten wird.

**Bezugszeichenliste:**

| | | | |
|---|---|---|---|
| 10 | Hubladebühne | 36 | Oberseite |
| 11 | Fahrzeug | 37 | Vorsprung |
| 12 | Tragrohr | 38 | Hakenkante |
| 13 | Längsträger | 39 | Hauptteil |
| 14 | Vorwärtsfahrtrichtung | 40 | Schenkel |
| 15 | Ladeplattform | 41 | Steg |
| 16 | Hubwerk | 42 | Schraube |
| 17 | Schwenkzylinder | 43 | Mutter |
| 18 | Lagerbock | 44 | Schraubenkopf |
| 19 | Querrand | 45 | Außenseite |
| 20 | Lagerbock | 46 | Haken |
| 21 | Lenkerarm | 47 | Ausnehmung |
| 22 | Unterfahrschutzrohr | 48 | Unterkante |
| 23 | Befestigungslasche | 49 | Schlitz |
| 24 | Konsolblech | 50 | Vorderkante |
| 25 | Schraubkonsole | 51 | Vorsprung |
| 26 | Schenkel | | |
| 27 | Steg | | |
| 28 | Rückwandung | | |
| 29 | Zwischenraum | | |
| 30 | Langloch | | |
| 31 | Kante | | |
| 32 | T-Profil | | |
| 33 | vertikaler Schenkel | | |
| 34 | Vorderwandung | | |
| 35 | horizontaler Schenkel | | |

## Patentansprüche

1. Vorrichtung zum Befestigen einer Hubladebühne (10) an einem Fahrzeug (11), mit vorzugsweise zwei mit dem Fahrgestell des Fahrzeugs verbindbaren Konsolen und mit einem Tragrohr (12), dem Schraubkonsolen (25) zugeordnet sind, wobei jede Konsole an nur einer Stelle und/oder nur an einer Seite mit jeweils einer Schraubkonsole (25) verschraubt ist, **dadurch gekennzeichnet, dass** jede Konsole an einer anderen Stelle, die der Stelle oder Seite, an der die Konsole mit der Schraubkonsole (25) verschraubt ist gegenüberliegt, zusätzlich durch eine Steck- bzw. Hakenverbindung mit dem Tragrohr (12) verbunden ist.

2. Vorrichtung nach Anspruch 1, **dadurch gekennzeichnet, dass** die Konsolen an ihren in Vorwärtsfahrtrichtung (14) des Fahrzeugs (11) gesehen hinteren Rändern mit der jeweiligen Schraubkonsole (25) verschraubt sind, vorzugsweise hinter dem Tragrohr (12).

3. Vorrichtung nach Anspruch 1 oder 2, **dadurch gekennzeichnet, dass** die Schraubkonsolen (25) nur am Tragrohr (12) befestigt sind, vorzugsweise hinter dem Tragrohr (12).

4. Vorrichtung nach einem der vorhergehenden Ansprüche, **dadurch gekennzeichnet, dass** jede Schraubkonsole (25) von oben gesehen U-förmig ausgebildet ist mit zwei parallelen, am Tragrohr (12) befestigten Schenkeln (26) und einem die Schenkel (26) verbindenden, vorzugsweise längeren, Steg (27), der hinter der Rückseite des Tragrohrs (12) sich mit parallelem Abstand zu demselben erstreckt und mindestens ein horizontales Langloch (30) aufweist.

5. Vorrichtung nach Anspruch 4, **dadurch gekennzeichnet, dass** jede Konsole als ein Konsolblech (24) ausgebildet ist, dessen Hauptteil (39) eine Längsachse des Tragrohrs (12) senkrecht schneidet, wobei vorzugsweise das jeweilige Konsolblech (24) am hinteren, senkrechten Rand zweifach rechtwinklig abgeknickt ist zur Bildung eines von oben gesehen U-förmigen, hinteren Randes des Konsolblechs (24), dessen rechtwinklig zum Hauptteil (39) verlaufender Steg (41) parallel zum Steg (27) der jeweiligen Schraubkonsole (25) verläuft und vorzugsweise dem Steg (41) des jeweiligen Konsolblechs (24) eine Schraubverbindung zum Verschrauben des Konsolblechs (24) mit der Schraubkonsole (25) zugeordnet ist.

6. Vorrichtung nach einem der vorhergehenden Ansprüche, **dadurch gekennzeichnet, dass** jedes Konsolblech (24) am der U-förmigen Abwinklung am hinteren Rand des Konsolblechs (24) gegenüberliegenden vorderen Randbereich, insbesondere an einem vorderen unteren Eckbereich, einen hakenartigen Vorsprung (51) für eine Einhakverbindung des Tragrohrs (12) am jeweiligen Konsolblech (24) aufweist.

7. Vorrichtung nach Anspruch 6, **dadurch gekennzeichnet, dass** das Tragrohr (12) mindestens einen mit den hakenartigen Vorsprüngen (51) der Konsolbleche (24) korrespondierenden Vorsprung (37) aufweist.

8. Vorrichtung nach Anspruch 6, **dadurch gekennzeichnet, dass** die hakenförmige Verbindung an jedem der beiden Konsolbleche (24) so ausgebildet ist, dass sie durch ein Verlagern des Tragrohrs (12) in Vorwärtsfahrtrichtung (14) des Fahrzeugs (11) schließbar ist.

9. Vorrichtung nach den Ansprüchen 5 und 6, **dadurch gekennzeichnet, dass** Schrauben (42) zur Herstellung der jeweiligen Schraubverbindung zwischen den Konsolblechen (24) und den Schraubkonsolen (25) an oder im Steg (41) der U-förmig abgewinkelten hinteren Ränder der Konsolbleche (24) fixiert sind und vorzugsweise die Konsolbleche (24) derart ausgebildet sind, dass beim Einhaken der Hakenverbindungen die Schrauben (42) durch die Langlöcher (30) in den Stegen (27) der Schraubkonsolen (25) gelangen.

10. Hubladebühne für ein Fahrzeug (11) mit einem Hubwerk (16), einer Ladeplattform (15) und einem Tragrohr (12), das Konsolen zur Verbindung des Tragrohrs (12) mit dem Fahrgestell, insbesondere Längsträger (13) des Fahrzeugs (11) aufweist, wobei dem Tragrohr Schraubkonsolen (25) zugeordnet sind, und wobei jede Konsole nur an einer Stelle und/oder nur an einer Seite mit jeweils einer Schraubkonsole (25) verschraubt ist, **dadurch gekennzeichnet, dass** jede Konsole an einer anderen Stelle, die der Stelle oder Seite, an der die Konsole mit der Schraubkonsole (25) verschraubt ist gegenüberliegt, zusätzlich durch eine Steck- bzw. Hakenverbindung mit dem Tragrohr (12) verbunden ist.

11. Hubladebühne nach Anspruch 10, **gekennzeichnet durch** eine Vorrichtung nach mindestens einem der Ansprüche 1 bis 9.

## Claims

1. Device for attaching a tailgate lift (10) to a vehicle (11), comprising preferably two brackets which are connectable to the chassis of the vehicle, and comprising a supporting tube (12) to which screw brackets (25) are assigned, wherein each bracket is screwed at only one location and/or only on one side to a respective screw bracket (25), **characterized in that** each bracket is additionally connected, at another location lying opposite the location or side at/on which the bracket is screwed to the screw bracket (25), to the supporting tube (12) by a plug-in or hook connection.

2. Device according to Claim 1, **characterized in that** the brackets are screwed at their rear edges, as seen in the forwards direction of travel (14) of the vehicle (11), to the respective screw bracket (25), preferably behind the supporting tube (12).

3. Device according to Claim 1 or 2, **characterized in that** the screw brackets (25) are attached only to the supporting tube (12), preferably behind the supporting tube (12).

4. Device according to one of the preceding claims, **characterized in that** each screw bracket (25) is of U-shaped design, as seen from above, with two parallel limbs (26) attached to the supporting tube (12) and with a preferably longer web (27) which connects the limbs (26), extends behind the rear side of the supporting tube (12) at a parallel distance therefrom and has at least one horizontal elongated hole (30).

5. Device according to Claim 4, **characterized in that** each bracket is designed as a bracket plate (24), the main part (39) of which perpendicularly intersects a longitudinal axis of the supporting tube (12), wherein the respective bracket plate (24) is preferably bent twice at a right angle at the rear vertical edge in order to form a U-shaped rear edge, as seen from above, of the bracket plate (24), whose web (41) running at a right angle to the main part (39) runs parallel to the web (27) of the respective screw bracket (25), and a screw connection for screwing the bracket plate (24) to the screw bracket (25) is preferably assigned to the web (41) of the respective bracket plate (24).

6. Device according to one of the preceding claims, **characterized in that** each bracket plate (24) has, on the front edge region lying opposite the U-shaped angled portion on the rear edge of the bracket plate (24), in particular at a front, lower corner region, a hook-like projection (51) for a hook-in connection of the supporting tube (12) on the respective bracket plate (24).

7. Device according to Claim 6, **characterized in that** the supporting tube (12) has at least one projection (37) corresponding to the hook-like projections (51) of the bracket plates (24).

8. Device according to Claim 6, **characterized in that** the hook-shaped connection on each of the two bracket plates (24) is designed in such a manner that it is closable by shifting of the supporting tube (12) in the forwards direction of travel (14) of the vehicle (11).

9. Device according to Claims 5 and 6, **characterized in that** screws (42) for producing the respective screw connection between the bracket plates (24) and the screw brackets (25) are fixed on or in the web (41) of the rear edges, angled in a U-shaped manner, of the bracket plates (24), and the bracket plates (24) are preferably designed in such a manner that, when the hook connections are hooked in, the screws (42) pass through the elongated holes (30) in the webs (27) of the screw brackets (25).

10. Tailgate lift for a vehicle (11), comprising a lifting mechanism (16), a loading platform (15) and a supporting tube (12) which has brackets for connecting the supporting tube (12) to the chassis, in particular longitudinal member (13) of the vehicle (11), wherein screw brackets (25) are assigned to the supporting tube, and wherein each bracket is screwed at only one location and/or only on one side to a respective screw bracket (25), **characterized in that** each bracket is additionally connected, at another location lying opposite the location or side at/on which the bracket is screwed to the screw bracket (25), to the supporting tube (12) by a plug-in or hook connection.

11. Tailgate lift according to Claim 10, **characterized by** a device according to at least one of Claims 1 to 9.

## Revendications

1. Dispositif pour la fixation d'un hayon élévateur (10) sur un véhicule (11), avec de préférence deux consoles pouvant être reliées au châssis du véhicule et avec un tube porteur (12) auquel sont associées des consoles vissées (25), chaque console étant vissée à respectivement une console vissée (25) en seulement un endroit et/ou sur seulement un côté, **caractérisé en ce que** chaque console est en outre reliée au tube porteur (12) par une liaison par enfichage ou accrochage en un autre point opposé au point ou côté auquel la console est vissée à la console vissée (25).

2. Dispositif selon la revendication 1, **caractérisé en ce que** les consoles sont vissées à la console vissée (25) respective au niveau des bords arrière vus dans la direction d'avancée (14) du véhicule (11), de préférence derrière le tube porteur (12).

3. Dispositif selon la revendication 1 ou 2, **caractérisé en ce que** les consoles vissées (25) ne sont fixées qu'au niveau du tube porteur (12), de préférence derrière le tube porteur (12).

4. Dispositif selon l'une quelconque des revendications précédentes, **caractérisé en ce que** chaque console vissée (25) est réalisée en forme de U vue du dessus avec deux branches (26) parallèles fixées au tube porteur (12) et un étai (27), de préférence plus long, reliant les branches (26) et s'étendant derrière le côté arrière du tube porteur (12) à une certaine distance parallèle par rapport à lui et comportant au moins un trou oblong (30) horizontal.

5. Dispositif selon la revendication 4, **caractérisé en ce que** chaque console est réalisée sous la forme d'une tôle de console (24) dont la partie principale (39) croise perpendiculairement un axe longitudinal du tube porteur (12), la tôle de console (24) respective étant de préférence coudée deux fois à angle droit au niveau du bord arrière vertical pour former un bord arrière en forme de U vu de dessus de la tôle de console (24) dont l'étai (41) s'étendant à angle droit par rapport à la partie principale (39) s'étend parallèlement à l'étai (27) de la console de vissage (25) respective et une liaison vissée étant de préférence associée à l'étai (41) de la tôle de console (24) respective pour visser la tôle de console (24) avec la console vissée (25).

6. Dispositif selon l'une quelconque des revendications précédentes, **caractérisé en ce que** chaque tôle de console (24) comporte, au niveau de la zone de bordure avant opposée au niveau du coude en forme de U, au niveau du bord arrière de la tôle de console (24), notamment au niveau d'une zone de coin inférieure avant, une saillie (51) de type crochet pour une liaison par accrochage du tube porteur (12) au niveau de la tôle de console (24) respective.

7. Dispositif selon la revendication 6, **caractérisé en ce que** le tube porteur (12) comporte au moins une saillie (37) correspondant aux saillies (51) de type crochet des tôles de console (24).

8. Dispositif selon la revendication 6, **caractérisé en ce que** la liaison en forme de crochet est réalisée au niveau de chacune des deux tôles de console (24) de telle sorte qu'elle puisse être refermée par déplacement du tube porteur (12) dans la direction d'avancée (14) du véhicule (11).

9. Dispositif selon les revendications 5 et 6, **caractérisé en ce que** les vis (42) servant à la mise en oeuvre de la liaison vissée respective entre les tôles de console (24) et les consoles vissées (25) sont fixées au niveau de ou dans l'étai (41) des bords arrière coudés en forme de U des tôles de console (24) et que les tôles de console (24) sont de préférence réalisées de telle sorte que lors de l'accrochage des liaisons par crochet, les vis (42) arrivent dans les étais (27) des consoles vissées (25), au travers des trous oblongs (30).

10. Hayon élévateur pour un véhicule (11) avec un dispositif de levage (16), une plateforme de chargement (15) et un tube porteur (12), comportant des consoles servant à relier le tube porteur (12) au châssis, notamment au support longitudinal (13) du véhicule (11), des consoles vissées (25) étant associées au tube porteur et chaque console étant vissée en un point seulement et/ou sur seulement un côté avec respectivement une console vissée (25), **caractérisé en ce que** chaque console est en sus reliée au tube porteur (12) par le biais d'une liaison par enfichage ou accrochage, en un autre point opposé au point ou côté auquel la console est vissée à la console vissée (25).

11. Hayon élévateur selon la revendication 10, **caractérisé par** la présence d'un dispositif selon au moins l'une quelconque des revendications 1 à 9.
